# EUROPEAN PATENT APPLICATION

(11) **EP 4 819 667 A1**
(43) Date of publication of application: **07.10.2026**
(21) Application number: 23960167.7
(22) Date of filing: 29.11.2023
(51) Int. Cl.: H04W 24/02, H04W 28/16

(54) **BASE STATION AND COMMUNICATION METHOD**

(71) Applicant: NTT DOCOMO, INC., Tokyo 100-6150 (JP); NTT, Inc., Tokyo 100-8116 (JP)
(72) Inventor: GOTO, Kenta, Tokyo 100-6150 (JP); SUYAMA, Satoshi, Tokyo 100-6150 (JP); MURAYAMA, Daisuke, Musashino-shi, Tokyo 180-8585 (JP); IWABUCHI, Masashi, Musashino-shi, Tokyo 180-8585 (JP); YAMADA, Takayuki, Musashino-shi, Tokyo 180-8585 (JP)
(74) Representative: Hoffmann Eitle
(86) International application number: PCT/JP2023/042823
(87) International publication number: WO 2025/115149

(57) **Abstract**

A base station includes a control unit configured to change at least one of an upper limit value of a network or a request value of each user, based on the upper limit value of the network, which is determined based on a capability of a network node, and the request value of each user; and a communication unit configured to execute communication with each user based on the upper limit value of the network and the request value of each user.

## Description

### TECHNICAL FIELD

The present invention relates to a base station and a communication method in a radio communication system.

### BACKGROUND ART

In the 3GPP (Registered Trademark) (3rd Generation Partnership Project), a radio communication system (hereinafter, this radio communication system is referred to as "NR") referred to as 5G or NR (New Radio) has been studied in order to implement further increase in system capacity, further increase in data transmission speed, further decrease in delay in a radio section, and the like. In 5G, various radio technologies and network architectures have been studied in order to satisfy the requirement of reducing the delay in a radio section to 1 ms or less while implementing a throughput of 10 Gbps or more (for example, Non-Patent Literature 1).

In next-generation communications, the use of high-frequency bands is expected. Improvements in communication quality are required from the viewpoints of a decrease in the number of scatterers, a decrease in the shadowing effect, and an increase in distance attenuation due to the characteristics of the high-frequency bands. It is assumed that beam control and environments that ensure communication quality are required.

For example, in high-frequency bands, there is a problem that dead zones are likely to occur due to the strong straightness of radio waves. Therefore, methods for improving communication quality in a multipath environment by using passive repeaters, active reflectors (RIS: Reconfigurable Intelligent Surface), smart repeaters that receive, amplify, and reemit signals, and the like, have been tried (e.g., Non-Patent Document 2).

### CITATION LIST

### Non-Patent Literature

Non-Patent Literature 1: 3GPP TS 38.300 V17.6.0 (2023-09)
Non-Patent Literature 2: NTT DOCOMO, "White Paper 5G Advancement and 6G" (Version 2021-02, 3.0)

### Internet

<URL: https://www.nttdocomo.co.jp/binary/pdf/corporate/technology/whitepaper_ 6g/DOCOMO_6G_White_PaperJP_20210203.pdf>

### SUMMARY OF INVENTION

### TECHNICAL PROBLEM

A new network topology (New Radio Network Topology, NRNT) for increasing connection paths of a radio network by further expanding a heterogeneous network from a conventional radio access network configuration designed on a cell base, causing a plurality of cell areas to overlap, and causing terminals to cooperate with each other including peripheral relay nodes, has been studied. On the other hand, it has been difficult to implement operations corresponding to changes in topology or dynamic user requirements.

The present invention has been made in view of the above, and it is an object of the present invention to adjust network capabilities and user requirements in a radio communication system.

### SOLUTION TO PROBLEM

According to the disclosed technology, there is provided a base station includes a control unit configured to change at least one of an upper limit value of a network ora request value of each user, based on the upper limit value of the network, which is determined based on a capability of a network node, and the request value of each user; and a communication unit configured to execute communication with each user based on the upper limit value of the network and the request value of each user.

### ADVANTAGEOUS EFFECTS OF INVENTION

According to the disclosed technology, a network capability and a user request can be adjusted in a radio communication system.

### BRIEF DESCRIPTION OF DRAWINGS

[FIG. 1] FIG. 1 is a diagram for explaining a radio communication system according to an embodiment of the present invention.
[FIG. 2] FIG. 2 is a diagram showing an example of a functional configuration of a base station 10 according to an embodiment of the present invention.
[FIG. 3] FIG. 3 is a diagram showing an example of a functional configuration of a terminal 20 according to an embodiment of the present invention.
[FIG. 4] FIG. 4 is a diagram showing an example of a functional configuration of a radio relay apparatus 30 according to an embodiment of the present invention.
[FIG. 5] FIG. 5 is a diagram showing an example of operation of the radio relay apparatus 30 according to an embodiment of the present invention.
[FIG. 6] FIG. 6 is a diagram showing an example of communication in a high-frequency band.
[FIG. 7] FIG. 7 is a diagram showing an example of a reflective radio relay apparatus 30 according to an embodiment of the present invention.
[FIG. 8] FIG. 8 is a diagram showing an example of a transmissive radio relay apparatus 30 according to an embodiment of the present invention.
[FIG. 9] FIG. 9 is a diagram showing an example (1) of communication according to an embodiment of the present invention.
[FIG. 10] FIG. 10 is a diagram showing an example (2) of communication according to an embodiment of the present invention.
[FIG. 11] FIG. 11 is a diagram showing an example of an NRNT according to an embodiment of the present invention.
[FIG. 12] FIG. 12 is a diagram showing an example (1) of a communication environment according to an embodiment of the present invention.
[FIG. 13] FIG. 13 is a flowchart for explaining an example (1) of controlling a network according to an embodiment of the present invention.
[FIG. 14] FIG. 14 is a diagram for explaining an example (1) of controlling a network according to an embodiment of the present invention.
[FIG. 15] FIG. 15 is a flowchart illustrating an example (2) of controlling a network according to an embodiment of the present invention.
[FIG. 16] FIG. 16 is a diagram illustrating an example (2) of controlling a network according to an embodiment of the present invention.
[FIG. 17] FIG. 17 is a flowchart illustrating an example (3) of controlling a network according to an embodiment of the present invention.
[FIG. 18] FIG. 18 is a diagram illustrating an example (3) of controlling a network according to an embodiment of the present invention.
[FIG. 19] FIG. 19 is a diagram illustrating an example of a hardware configuration of the base station 10, the terminal 20, or the radio relay apparatus 30 according to an embodiment of the present invention.
[FIG. 20] FIG. 20 is a diagram illustrating an example of a configuration of a vehicle 2001 according to an embodiment of the present invention.

### DESCRIPTION OF EMBODIMENTS

Embodiments of the present invention will be described below with reference to the accompanying drawings. It should be noted that the embodiments described below are only examples, and embodiments to which the present invention is applied are not limited to the following embodiments.

In the operation of the radio communication system according to the embodiment of the present invention, existing technologies are appropriately used. However, the existing technologies are, for example, existing LTE, but are not limited to existing LTE. Further, the term "LTE" used in this specification has a broad meaning including LTE-Advanced and a system after LTE-Advanced (e.g., NR) unless otherwise specified.

In the embodiments of the present invention described below, terms such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), and PUSCH (Physical Uplink Shared Channel) used in the existing LTE are used. This is for convenience of description, and signals, functions, etc. similar to these may be referred to by other names. The above-mentioned terms in NR correspond to NR-SS, NR-PSS, NR-SSS, NR-PBCH, NR-PRACH, and the like. However, even signals used in NR are not always specified as "NR-".

In the embodiment of the present invention, the duplex system may be a TDD (Time Division Duplex) system, an FDD (Frequency Division Duplex) system, or other systems (e.g., Flexible Duplex, etc.).

Further, in the embodiment of the present invention, the term "configure" a wireless parameter, etc., may mean that a predetermined value is pre-configured or that a wireless parameter reported from the base station 10 or the terminal 20 is set.

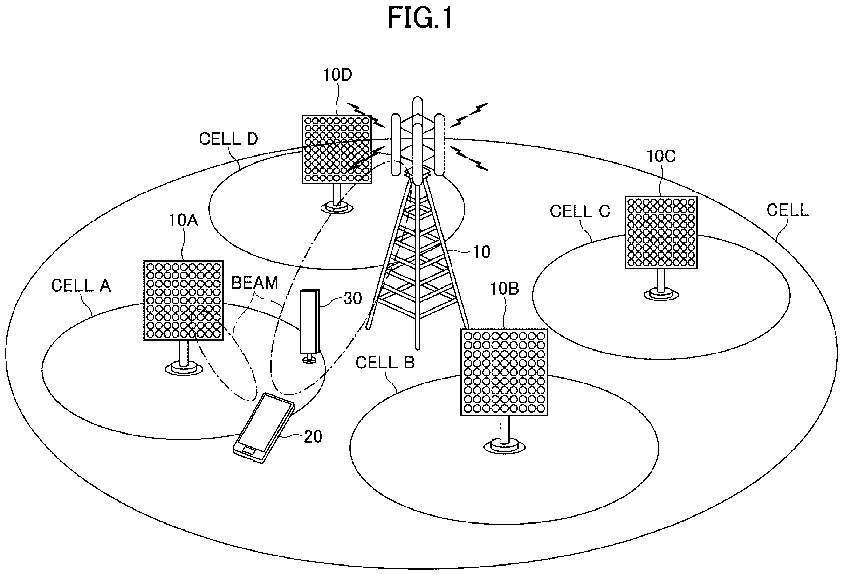

FIG. 1 is a diagram for explaining a radio communication system in the embodiment of the present invention. As illustrated in FIG. 1, the radio communication system in the embodiment of the present invention includes a base station 10 and a terminal 20. Each of the base station 10 and the terminal 20 may be provided in plurality.

The base station 10 is a communication device which provides one or more cells and performs radio communication with the terminal 20. The physical resources of the radio signal are defined by a time domain and a frequency domain, the time domain may be defined by the number of OFDM (Orthogonal Frequency Division Multiplexing) symbols, and the frequency domain may be defined by the number of subcarriers or the number of resource blocks. The TTI (Transmission Time Interval) in the time domain may be a slot or a subslot, and the TTI may be a subframe.

The base station 10 can perform carrier aggregation in which a plurality of cells (a plurality of CCs (Component Carriers)) are bundled to communicate with the terminal 20. In the carrier aggregation, one primary cell (PCell, Primary Cell) and one or more secondary cells (SCell, Secondary Cell) are used.

The base station 10 transmits a synchronization signal, system information, and the like to the terminal 20. The synchronization signal is, for example, NR-PSS and NR-SSS. The system information is transmitted, for example, by NR-PBCH or PDSCH and is also referred to as broadcast information. As shown in FIG. 1, the base station 10 transmits a control signal or data to the terminal 20 by DL (Downlink) and receives a control signal or data from the terminal 20 by UL (Uplink). Here, information transmitted by a control channel such as PUCCH or PDCCH is referred to as a control signal, and information transmitted by a shared channel such as PUSCH or PDSCH is referred to as a data, but such references are only examples.

The terminal 20 is a communication device having a radio communication function, such as a smartphone, a cellular phone, a tablet, a wearable terminal, and a communication module for M2M (Machine-to-Machine). As shown in FIG. 1, the terminal 20 receives a control signal or data from the base station 10 by DL and transmits the control signal or data to the base station 10 by UL to use various communication services provided by the radio communication system. Note that the terminal 20 may be referred to as a UE and the base station 10 may be referred to as a gNB.

The terminal 20 can perform carrier aggregation in which a plurality of cells (a plurality of CCs) are bundled to communicate with the base station 10. In carrier aggregation, one primary cell and 1 or more secondary cells are used. Further, a PUCCH-SCell having a PUCCH may be used.

In the radio communication system according to the embodiment of the present invention, the base station 10 is a radio base station operated by 5G or 6G as an example, and forms a cell. The cells are relatively large-sized cells and are referred to as macrocells.

The base station 10A to the base station 10D are base stations operating on 5G or 6G. The base station 10A to the base station 10D form cells CA to D, which are smaller in size than the macrocells. The cells A to D may be referred to as small cells, macrocells, or the like. As shown in FIG. 1, the cells A to D may be formed to be included in a macrocell.

A macrocell may be generally interpreted as a communicable area with a radius of several hundred meters to several tens of kilometers covered by one base station. Further, a small cell may be interpreted as a generic term for a cell having a small transmission power and covering a smaller area than a macrocell.

The base station 10 and the base station 10A to the base station 10D may be represented by gNodeB (gNB) or BS (Base Station). The terminal 20 may be represented by UE, MS, or the like. Further, the specific configuration of the radio communication system including the number and type of the base station and the terminal is not limited to the example shown in FIG. 1.

Further, the radio communication system is not necessarily limited to a radio communication system according to 5G or 6G. For example, the radio communication system may be a next-generation radio communication system of 6G or a radio communication system according to LTE.

The base station 10 and the base station 10A to base station 10D perform radio communication according to 5G or 6G with the terminal 20, as an example. The base station 10 and the base station 10A-base station 10D and the terminal 20 may support Massive Multiple-Input Multiple-Output (MIMO), which generates a beam with a higher directivity by controlling radio signals transmitted from a plurality of antenna elements; Carrier Aggregation (CA), which uses a plurality of Component Carriers (CCs) bundled together; Dual Connectivity (DC), which simultaneously performs communication between the terminal 20 and each of 2 NG-RAN nodes; and Integrated Access and Backhaul (IAB), which integrates radio backhaul between radio communication nodes such as gNB and radio access to the terminal 20.

The radio communication system may also support a higher frequency band than the following frequency range (FR) specified in 3GPP Release 15. For example, FR1 may support 410 MHz - 7.125 GHz, and FR2 may support 24.25 GHz - 52.6 GHz. Further, the radio communication system may support a frequency band exceeding 52.6 GHz to 114.25 GHz. This frequency band may be referred to as a millimeter wave band.

Here, the base station 10 corresponding to massive MIMO can transmit a beam. Massive MIMO generally means MIMO communication using an antenna having 100 or more antenna elements, and a multiplexing effect of a plurality of streams or the like enables high-speed radio communication. Further, advanced beamforming is also possible. The beam width can be dynamically changed according to the frequency band to be used or the state of the terminal 20. Further, it is possible to increase the received signal power due to the beamforming gain by using a narrow beam. Further, effects such as reduction of interference and effective use of radio resources are expected.

Further, the radio communication system may include a radio relay apparatus 30. In the embodiment of the present invention, as an example, the radio relay apparatus 30 may be a reflector (RIS: Reconfigurable Intelligent Surface), a phase control reflector, a passive repeater, IRS (Intelligent Reflecting Surface), or the like. A specific example of the reflector (RIS) may be a metamaterial reflector, a dynamic metasurface, a metasurface lens, or the like (e.g., Non-Patent Document 2).

In the embodiment of the present invention, the radio relay apparatus 30 relays, for example, a radio signal transmitted from the base station 10A. In the description of the embodiment of the present invention, the term "relay" may refer to at least one of "reflection", "transmission", "aggregation (concentrating radio waves at substantially one point)", or "diffraction". The terminal 20 can receive the radio signal relayed by the radio relay apparatus 30. Further, the radio relay apparatus 30 may relay a radio signal transmitted from the terminal 20, or may relay a radio signal transmitted from the base station 10.

As an example, the radio relay apparatus 30 can change the phase of a radio signal relayed to the terminal 20. From this viewpoint, the radio relay apparatus 30 may be referred to as a phase variable reflector. Although the radio relay apparatus 30 may have a function of changing the phase of a radio signal and relaying it in this embodiment, it is not limited to this. The radio relay apparatus 30 may be referred to as a repeater, relay device, reflect array, IRS, or transmit array.

In the embodiment of the present invention, the radio relay apparatus 30 such as RIS may be referred to as a battery-less device, a metamaterial function device, an intelligent reflecting surface, a smart repeater, or the like. As an example, the radio relay apparatus 30 such as RIS or smart repeater may be defined as having a function described in 1)-5) below.
1) The radio relay apparatus 30 may have a function of receiving a signal transmitted from the base station 10. The signal may be a DL signal such as SSB (SS/PBCH block), PDCCH, PDSCH, DM-RS (Demodulation Reference Signal), PT-RS (Phase Tracking Reference Signal), CSI-RS (Channel Status Information Reference Signal), RIS exclusive-use signal, etc. The radio relay apparatus 30 may have a function of receiving a signal carrying information related to a metamaterial function. The radio relay apparatus 30 may have a transmission function of transmitting the signal to the terminal 20. The SSB may be a signal including a synchronization signal and notification information.
2) The radio relay apparatus 30 may have a function of transmitting a signal to the base station 10. The signal may be a UL signal such as a PRACH, PUCCH, PUSCH, DM-RS, PT-RS, SRS, or RIS exclusive-use signal. The radio relay apparatus 30 may have a function of transmitting information related to a metamaterial function. The radio relay apparatus 30 may have a reception function of receiving the signal from the terminal 20.
3) The radio relay apparatus 30 may have a frame synchronization function with the base station 10. The radio relay apparatus 30 may have a frame synchronization function with the terminal 20.
4) The radio relay apparatus 30 may have a reflection function of a signal transmitted from the base station 10 or the terminal 20. For example, the reflection function may be a function related to phase change or a function related to beam control (for example, functions related to control of TCI (Transmission Configuration Indication) state and QCL (Quasi Co Location), selective application of beams, and selective application of spatial filters/precoding weights).
5) The radio relay apparatus 30 may have a power change function of a signal transmitted from the base station 10 or the terminal 20. For example, the power change function may be power amplification.

Further, "receive and transmit" or "relay" in the radio relay apparatus 30 such as the RIS or the smart repeater may mean that the function A below is performed, but the function B below is not performed and the signal is transmitted.
Function A: A phase shifter is applied.
Function B: No compensation circuit (e.g., amplification, filtering) is used.

As another example,
Function A: A phase shifter and a compensation circuit are applied.
Function B: No frequency conversion is used.

When the phase is changed in the radio relay apparatus 30 such as RIS, the amplitude may be amplified. Further, "relay" in the radio relay apparatus 30 such as RIS may mean transmitting a received signal as it is without performing processing at the layer 2 or layer 3 level, transmitting a signal received at the physical layer level as it is, or transmitting a received signal as it is without interpreting the signal (at this time, a phase change or an amplitude amplification may be performed.).

### (Device Configuration)

Next, an example of the functional configuration of the base station 10, the terminal 20, and the radio relay apparatus 30 for executing the processing and operation in the embodiment of the present invention will be described. The base station 10, the terminal 20, and the radio relay apparatus 30 include functions for executing the embodiments described below. However, the base station 10, the terminal 20, and the radio relay apparatus 30 may each have only one of the functions of the embodiments.

### <Base Station 10>

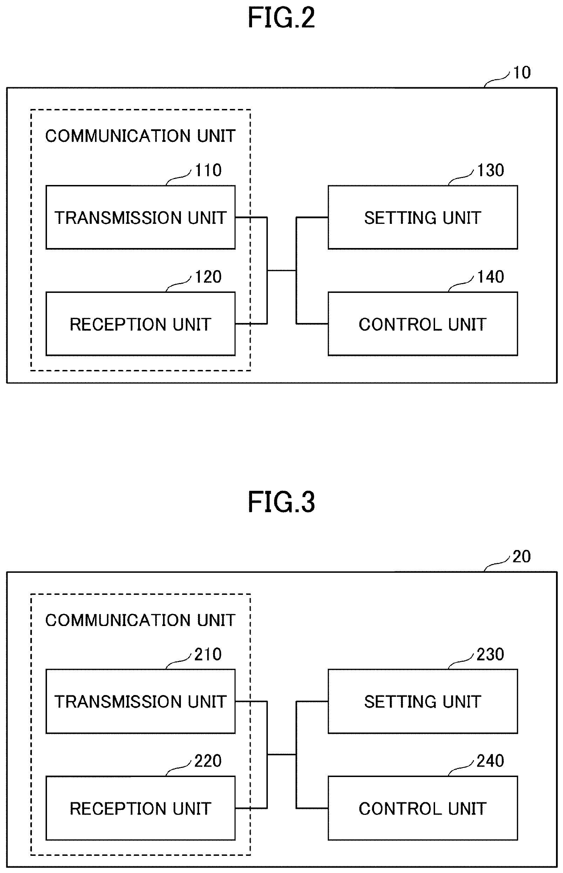

FIG. 2 is a diagram illustrating an example of the functional configuration of the base station 10. As illustrated in FIG. 2, the base station 10 includes a transmission unit 110, a reception unit 120, a setting unit 130, and a control unit 140. The functional configuration illustrated in FIG. 2 is only an example. As long as the operation according to the embodiment of the present invention can be executed, the functional classification and the name of the functional unit may be any. The transmission unit 110 and the reception unit 120 may be referred to as a communication unit.

The transmission unit 110 includes a function of generating a signal to be transmitted to the terminal 20 and wirelessly transmitting the signal. The reception unit 120 includes a function of receiving various signals transmitted from the terminal 20 and acquiring, for example, information of a higher layer from the received signals. The transmission unit 110 also has a function of transmitting NR-PSS, NR-SSS, NR-PBCH, DL/UL control signals, DL data and the like to the terminal 20. The transmission unit 110 also transmits setting information and the like described in the embodiment.

The setting unit 130 stores, in a storage device, setting information to be set in advance and various kinds of setting information to be transmitted to the terminal 20, and reads it from the storage device as necessary. The control unit 140 performs, for example, resource allocation and control of the entire base station 10. Note that a functional unit related to signal transmission in the control unit 140 may be included in the transmission unit 110, and a functional unit related to signal reception in the control unit 140 may be included in the reception unit 120. The transmission unit 110 and the reception unit 120 may be referred to as a transmitter and a receiver, respectively. The control unit 140 may include an acquisition unit for acquiring information.

### <Terminal 20>

FIG. 3 is a diagram illustrating an example of the functional configuration of the terminal 20. As illustrated in FIG. 3, the terminal 20 includes a transmission unit 210, a reception unit 220, a setting unit 230, and a control unit 240. The functional configuration illustrated in FIG. 3 is only an example. As long as the operation according to the embodiment of the present invention can be executed, the functional classification and the name of the functional unit may be any. The transmission unit 210 and the reception unit 220 may be referred to as a communication unit.

The transmission unit 210 creates a transmission signal from the transmission data and wirelessly transmits the transmission signal. The reception unit 220 wirelessly receives various signals and acquires a signal of a higher layer from the received signal of a physical layer. The transmission unit 210 transmits HARQ-ACK, and the reception unit 220 receives setting information and the like described in the embodiment.

The setting unit 230 stores, in a storage device, various kinds of setting information received from the base station 10 by the reception unit 220 and reads it from the storage device as necessary. The setting unit 230 also stores setting information set in advance. The control unit 240 controls the entire terminal 20. Note that a functional unit related to signal transmission in the control unit 240 may be included in the transmission unit 210, and a functional unit related to signal reception in the control unit 240 may be included in the reception unit 220. Further, the transmission unit 210 and the reception unit 220 may be referred to as a transmission unit and a reception unit, respectively.

### <Radio relay apparatus 30>

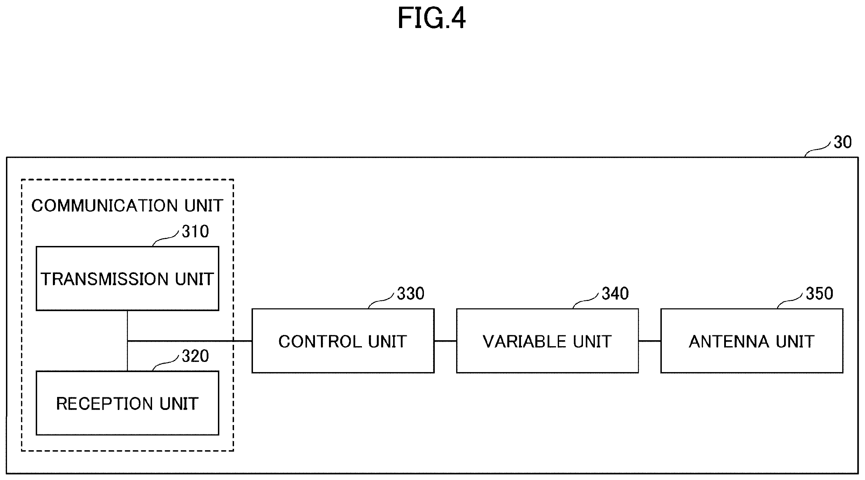

FIG. 4 is a diagram showing an example of the functional configuration of the radio relay apparatus 30 according to the embodiment of the present invention. As shown in FIG. 4, the radio relay apparatus 30 includes a transmission unit 310, a reception unit 320, a control unit 330, a variable unit 340, and an antenna unit 350. As long as the operation according to the embodiment of the present invention can be executed, the functional classification and the name of the functional unit may be any. The transmission unit 310 and the reception unit 320 may be referred to as a communication unit.

The antenna unit 350 includes at least one antenna connected to the variable unit 340. For example, the antenna unit 350 may be arranged as an array antenna. In some embodiments of the present invention, the antenna unit 350 may be specifically referred to as a relay antenna. The variable unit 340 and the antenna unit 350 may be referred to as a relay unit.

The variable unit 340 is connected to the antenna unit 350, and can change the phase, load, amplitude, and the like. For example, the variable unit 340 may be a variable phase shifter, phase shifter, amplifier, and the like. For example, the direction of the radio wave or the beam can be changed by changing the phase of the radio wave arriving at the relay antenna from the radio wave generation source.

The control unit 330 is control means for controlling the variable unit 340. In the embodiment of the present invention, the control unit 330 functions as a control unit for controlling the relay state when relaying the radio wave from the base station 10 or the terminal 20 without interpreting the signal. Here, the control unit 330 may change the relay state based on control information received from the base station 10 or the terminal 20 via the communication unit, or may change the relay state based on the reception state of the radio wave from the base station 10 or the terminal 20. For example, the control unit 330 may select an appropriate reception beam and transmission beam (direction) based on control information such as the SSB and control the variable unit 340. Similarly, the control unit 330 may select an appropriate combination of the reception direction and transmission direction based on criteria such as the highest reception quality or the highest reception power based on the reception state and control the variable unit 340.

In the embodiment of the present invention, the control unit 330 can control the variable unit 340, for example, based on information about a propagation path between the terminal 20 or the base station 10A and the antenna unit 350 (including information estimated by reception status and control information; the same applies below). For example, the control unit 330 can relay a radio wave received from the base station 10A to a specific direction such as a radio wave reception destination (in this case, the terminal 20) by changing the phase without using transmission power, by using a known method such as an active repeater or RIS. Specifically, the control unit 330 controls the phase of the radio signal in order to relay the radio wave to the terminal 20 or the base station 10A based on the estimated propagation path information H_{PT} and H_{RP}. That is, the radio wave can be relayed to a specific direction by changing the phase of the array antenna or the like in the same principle as beam forming or the like. Note that the radio relay apparatus 30 controls (changes) only the phase of the radio signal (radio wave) by the control unit 330, and may relay the radio wave without power supply without amplifying the power of the radio signal to be relayed.

Further, the control unit 330 may acquire information according to the reception state in the embodiment of the present invention. Further, the reception unit 320 may acquire control information from the base station 10A or the terminal 20. For example, the reception unit 320 may receive various signals (including various signals exemplified in the functions described above) such as SSB transmitted from the base station 10A or the terminal 20 as control information.

Further, the control unit 330 may estimate propagation path information (H_{PT} and H_{RP}) between the radio wave generation source (for example, the base station 10A or the terminal 20) and the antenna unit 350 based on the reception state (e.g., changes in received power, etc.) when the variable unit 340 is controlled.

Specifically, the propagation path information (propagation channel information) concerning each propagation path is information such as amplitude or phase, and is information estimated with respect to the propagation path of the radio wave arriving at the antenna unit 350 in the embodiment of the present invention. As an example, the control unit 330 may estimate the propagation path information of the antenna unit 350 based on a change in the received power when the phase of the variable unit 340 of the arrayed antenna unit 350 is switched to orthogonal by the same principle as I/Q (In-phase/Quadrature) detection.

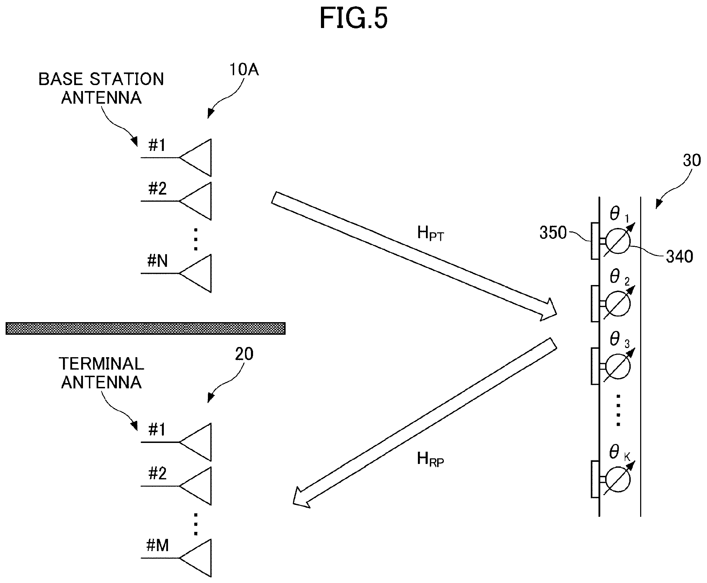

FIG. 5 is a diagram showing an operation example of the radio relay apparatus 30 in the embodiment of the present invention. As shown in FIG. 5, as an example, the radio relay apparatus 30 is interposed between the base station 10A (or another base station 10 or the like may be used) and the terminal 20, and relays (reflection, transmission, aggregation, diffraction, etc.) radio signals transmitted and received between the base station 10A and the terminal 20.

As a specific example, when the radio quality is good, the base station 10A and the terminal 20 directly transmit and receive radio signals without passing through the radio relay apparatus 30. On the other hand, when the radio quality is degraded such as when there is a shield between the base station 10A and the terminal 20, the radio relay apparatus 30 relays radio signals transmitted and received between the base station 10A and the terminal 20.

Specifically, the radio relay apparatus 30 estimates propagation path information H_{PT} and H_{RT} between a radio wave generation source such as the base station 10A or the terminal 20 and a relay antenna based on a change in received power when the variable unit 340 such as the variable phase shifter is controlled, and relays a radio signal to a radio wave reception destination such as the terminal 20 by controlling the variable unit 340 such as the variable phase shifter based on the estimated propagation path information. Note that the radio relay apparatus 30 is not limited to estimating the propagation path information H_{PT} and H_{RT}, and the radio relay apparatus 30 may relay a radio signal to a radio wave reception destination such as the base station 10A or the terminal 20 by controlling the variable unit 340 such as the variable phase shifter based on control information received from the base station 10A or the terminal 20.

Here, a propagation path or propagation channel is an individual communication path of radio communication, and is a communication path between transmission and reception antennas (such as the base station antenna and the terminal antenna in the figure).

As an example, the radio relay apparatus 30 includes an antenna unit 350 having a small multi-element antenna compatible with massive MIMO, and a variable unit 340 having a variable phase shifter or phase shifter for changing the phase of a radio signal, substantially a radio wave, to a specific phase, and controls the phase of the radio wave relayed to the terminal 20 or the base station 10A by using the variable unit 340.

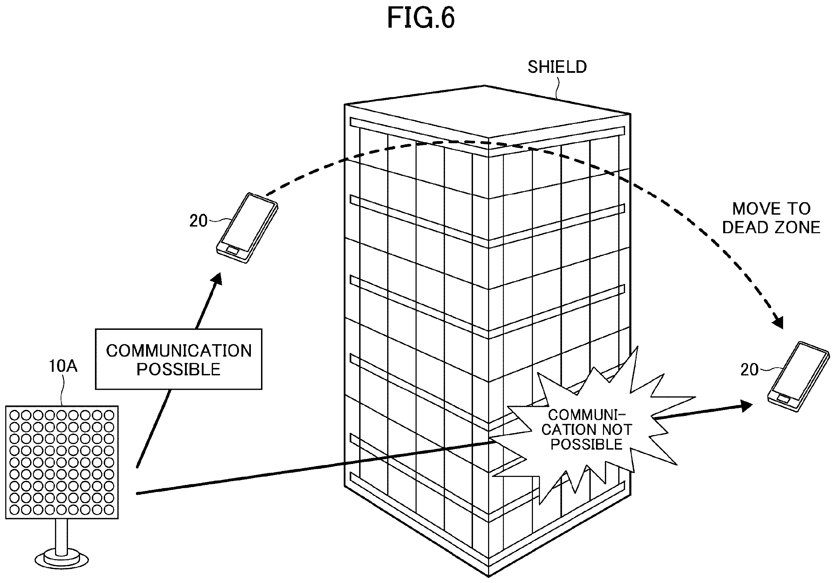

FIG. 6 is a diagram showing an example of communication in a high-frequency band. As shown in FIG. 6, when a high-frequency band of several GHz to several tens GHz or more is used, a dead zone is likely to occur due to the strong straightness of the radio wave. When the line between the base station 10A and the terminal 20 is visible, the radio communication between the base station 10A and the terminal 20 is not affected even when the high frequency band is used. On the other hand, when the line of sight between the base station 10A and the terminal 20 is blocked by, for example, a building or a tree, the radio quality is greatly degraded. That is, when the terminal 20 moves to a dead zone that is blocked by a shield, the communication may be interrupted.

Considering the existence of applications (e.g., remote control) that utilize high-speed, large-capacity, and low-delay characteristics, it is important to eliminate the dead zone and ensure the connection between the base station and the terminal without interrupting the communication in the radio communication system.

Therefore, technologies that can relay radio waves between the base station 10A and the terminal 20, such as radio wave propagation control devices such as RIS or smart repeaters, have been developed. By controlling the propagation characteristics of the base station signals in this way, the communication characteristics can be improved, coverage can be expanded without requiring a signal source, and installation and operation costs can be reduced by increasing the number of base stations.

Conventional radio wave propagation control devices are classified into passive and active types. The passive type has the advantage that control information is not required, but it cannot follow a mobile object or environmental fluctuation. On the other hand, the active type has the disadvantage that control information is required and overhead increases, but it can variably control the propagation characteristics of radio waves by changing the load (phase) state of the control antenna, and it can follow a mobile object or environmental fluctuation.

There are two types of active radio wave propagation control devices and control methods: feedback (FB) norms and propagation path information norms. In the FB norm, the variable radio wave propagation control device searches for an optimum condition by having the terminal 20 or the like feed back the communication state when the load (phase) state is randomly changed. On the other hand, in the propagation path information norm, the load state is determined based on the propagation path information between the base station and the radio wave propagation control device, and the optimum radio wave propagation control can be performed. In the embodiment of the present invention, either type can be applied.

Further, as the relay method, there are types such as reflection, transmission, diffraction, aggregation, etc. In the present embodiment, as an example, configuration examples of the reflection type and the transmission type will be described below (for the diffraction type and the aggregation type, see Non-Patent Document 2, etc.).

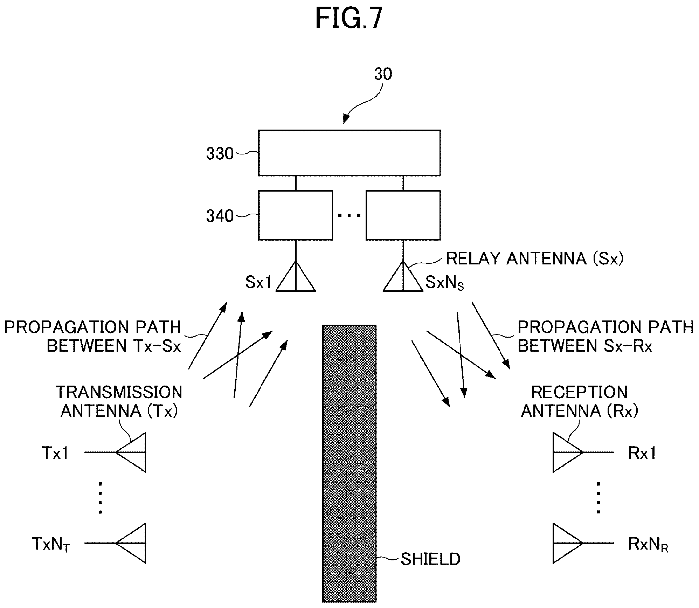

FIG. 7 is a diagram showing an example of a reflective radio relay apparatus 30 according to an embodiment of the present invention. An example of a system configuration of the reflective radio relay apparatus 30 will be described with reference to FIG. 7. FIG. 7 is a diagram showing a relationship between a transmission antenna Tx of a base station 10A or the like, a relay antenna Sx of a transmissive radio relay apparatus 30, and a reception antenna Rx of a terminal 20 or the like. As shown in FIG. 7, in an embodiment of the present invention, MIMO is used as an example, and there are a plurality of propagation paths between Tx and Sx and a plurality of propagation paths between Sx and Rx, and the radio relay apparatus 30 controls a variable unit 340 having a variable phase device or the like of the relay antenna Sx to relay radio waves.

As shown in FIG. 7, in the case of the reflective radio relay apparatus, the arrayed relay antennas are arranged so as to be directed in the same direction. Thus, the propagation paths of the relay antennas can be estimated based on a reception state observed when a plurality of phase conditions of the relay antennas are changed.

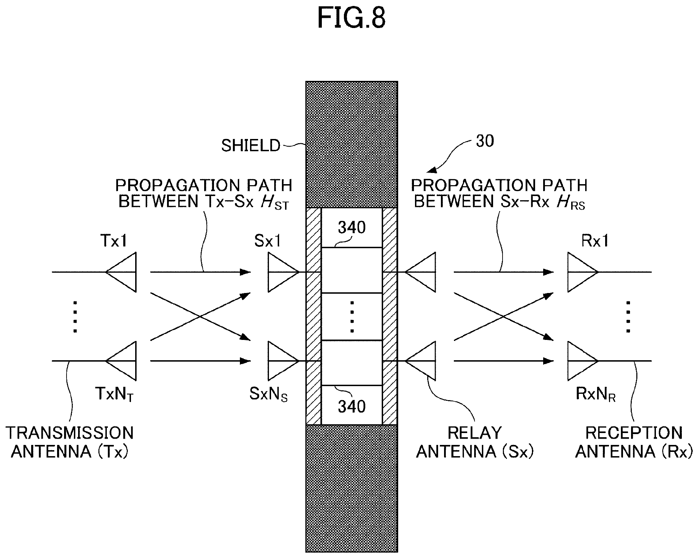

FIG. 8 is a diagram showing an example of a transmissive radio relay apparatus 30 in an embodiment of the present invention. An example of a system configuration of the transmissive radio relay apparatus 30 will be described with reference to FIG. 8. FIG. 8 is a diagram showing the relationship between the transmission antenna Tx of the base station 10A and the like, the relay antenna Sx of the transmissive radio relay apparatus 30, and the reception antenna Rx of the terminal 20 and the like. As shown in FIG. 8, in the embodiment of the present invention, MIMO is used as an example, and there are a plurality of propagation paths between Tx and Sx and a plurality of propagation paths between Sx and Rx, and the radio relay apparatus 30 relays a radio wave arriving from one side to the other side via a variable unit 340 such as a variable phaser of the relay antenna Sx as shown in the figure. Thus, in the case of the transmission type, the reference antenna on the left side of the figure and the relay antenna on the right side of the figure are arranged as a pair and directed in opposite directions so that a radio wave arriving from one side can be relayed to the other side. In either the transmission type or the reflection type, the reception state may be measured by detecting the power arriving at the relay antenna by a power detector or the like. Further, the propagation path of the relay antenna can be estimated based on the received signal observed when a plurality of phase conditions of the relay antenna are changed.

For example, future networks such as 6G will require higher quality than 5G. For example, ultra-high speed on the order of terabits per second, high reliability and low delay at the level of optical communication are required. Further, design considering ultra-coverage extension, ultra-long distance communication, ultra-reliable communication, virtual cell, flexible network, mesh network, sidelink enhancement, RIS, or smart repeater is required.

To achieve this quality, the use of very high frequencies, for example, Tera Hz waves, is assumed. For example, in the case of the use of very high frequencies such as Tera Hz waves, while high speed due to the use of ultra-wideband and low delay due to the short symbol length are assumed as advantages, there are also assumed disadvantages such as narrow coverage due to a large attenuation rate and lower reliability due to strong straightness. For each point where 6G communication is required, it is required to consider how to ensure redundancy, that is, how to increase transmission points of communication.

As described above, the RIS reflects or transmits a beam transmitted from the base station 10 or the terminal 20 in a predetermined direction and delivers it to the terminal 20 or the base station 10. The passive type RIS is a device that does not change the control of the reflection angle or the beam width or the like according to the position of the mobile station, and while control information is unnecessary, precise beam control is difficult. The active type RIS is a device that changes the control of the reflection angle or the beam width or the like according to the position of the mobile station, and while precise beam control is possible, overhead increases because control information is required. The RIS can increase the number of transmission points for communication.

The RIS may have the name shown in 1)-4) below, but is not limited to these names.
1) Battery-less device
2) Metamaterial function device
3) Intelligent reflecting surface
4) Smart repeater

The RIS may be any device having a predetermined function, and the predetermined function may be, for example, at least one of the functions 1) or 2) described below.

### 1) UE function

A function for receiving a signal transmitted from the base station 10 (e.g., DL signal, SSB, PDCCH, PDSCH, DM-RS, PT-RS, CSI-RS, RIS-exclusive use signal). Information related to the following 2) metamaterial function may be received by the receiving function. Signal transmission function to the base station 10 (e.g., UL signals, PRACH, PUCCH, PUSCH, DM-RS, PT-RS, SRS, RIS-exclusive use signal). Information related to the following 2) metamaterial function may be transmitted by this transmission function. Frame synchronization function with the base station 10.

### 2) Metamaterial function

Reflection function for signals transmitted from the base station 10 or the terminal 20 (for example, phase change). A signal may be reflected by changing the phase for each of a plurality of reflective elements of the RIS, or a signal may be reflected by changing the phase in common for a plurality of reflective elements. Function related to beam control (for example, functions related to TCI-state, control of QCL, selective application of beam, selective application of spatial filter/precoding weight). Power change function for signals transmitted from the base station 10 or the terminal 20 (e.g., power amplification). Different power changes may be performed for each of reflective elements of the RIS, or common power changes may be performed for a plurality of reflective elements.

"Receive and transmit" in RIS may mean reflecting radio waves/signals. Hereinafter, the terms "base station" and "terminal" will be used, but the names are not limited to these terms, and may be replaced with a communication device. RIS may be replaced with a smart repeater, repeater, or the like.

For example, RIS may operate on the assumption shown in 1)-6) below.
1) Network operator sets RIS
2) RIS is fixed and does not move
3) RIS relays signals from only one base station
4) Control signals can be received and transmitted
5) Operate on half-duplex
6) Single RIS environment

As described above, for the purpose of flexibly and inexpensively expanding the communication area of a radio communication network, utilization of an RIS, a smart repeater, or the like is considered. A major difference between the RIS or the smart repeater and the IAB node is that the IAB node performs baseband signal processing, while the RIS or the smart repeater does not perform baseband processing. In order to control the transmission direction, the transmission beam, or the like of the RIS or the smart repeater, a connection may be established between the base station 10 and the RIS or the smart repeater, and setting information may be defined in advance.

For example, the terminal 20 may operate in the following manner when using a signal via a plurality of radio relay apparatuses 30 such as RIS or smart repeater. In the following description, RIS may be replaced with smart repeater.

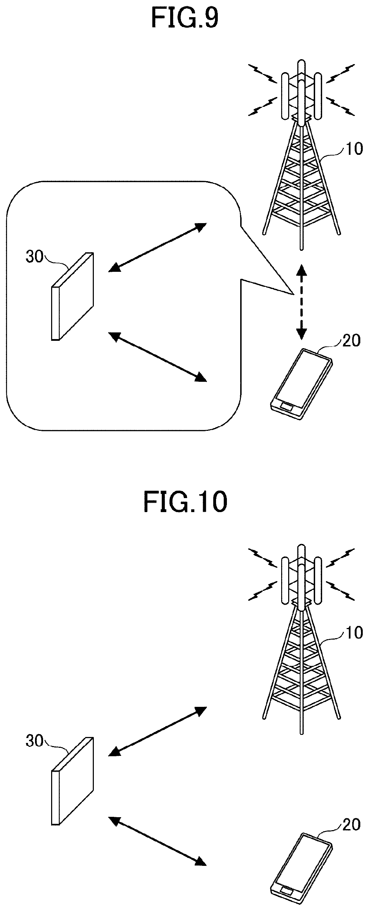

FIG. 9 is a diagram showing an example (1) of communication according to an embodiment of the present invention. As shown in FIG. 9, a case 1 is assumed in which the presence of the RIS 30 is transparent and the base station 10 and the terminal 20 do not recognize that they are communicating via the RIS 30.

FIG. 10 is a diagram showing an example (2) of communication according to an embodiment of the present invention. As shown in FIG. 10, a case 2 is assumed in which the presence of the RIS 30 is non-transparent and the base station 10 and the terminal 20 recognize that they are communicating via the RIS 30.

In order to improve the performance of a radio access network for 5G evolution and 6G, a new network topology (New Radio Network Topology, NRNT) is being studied in which a heterogeneous network is further expanded from a conventional cell-based designed radio access network configuration, a plurality of cell areas are overlapped, and terminals, including peripheral relay nodes, cooperate with each other to increase connection paths of the radio network.

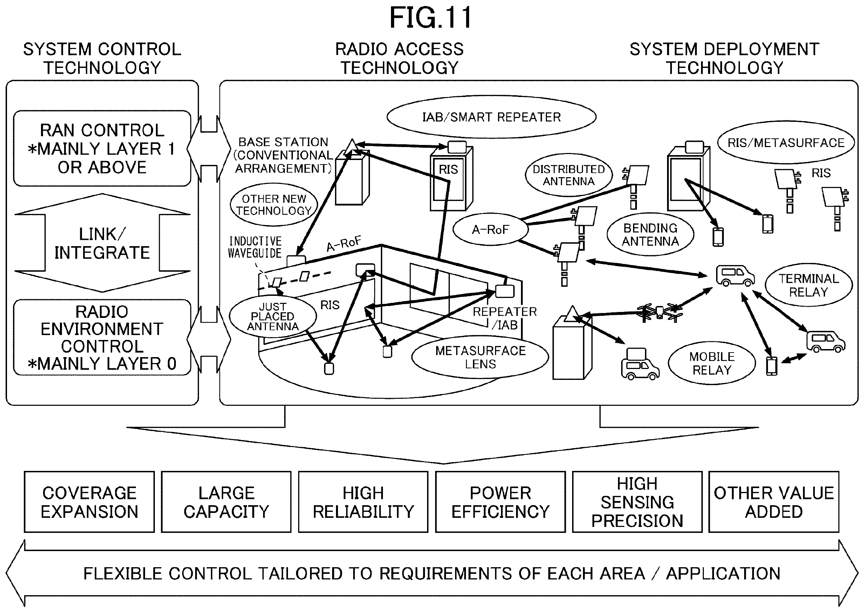

FIG. 11 is a diagram showing an example of NRNT according to an embodiment of the present invention. As shown in FIG. 11, NRNT can be expected to expand coverage, increase room for path selection, expand a line-of-sight area, avoid occlusion, and increase the number of MIMO spatial multiplexes.

As shown in FIG. 11, system control technologies include RAN control and radio environment control, which may be linked or integrated. Radio access technologies and system deployment technologies include IAB or smart repeater, A-RoF (Analog Radio-over-Fiber), distributed antenna, RIS or metasurface, terminal relay, mobile relay, etc. NRNT enables flexible control according to requirements for each area or application.

One of the elemental technologies of NRNT is metasurface or RIS, which is an advanced reflector technology. Metasurface is a kind of artificial medium (metamaterial) that realizes arbitrary permittivity and permeability by periodically arranging small structures with respect to wavelength. As described above, RIS is a device that has variable in-plane scattering characteristics and can dynamically control the reflection or transmission direction.

For example, in NRNT, it is expected to meet different service requirements depending on locations such as high-capacity areas and areas with high power efficiency, and to simultaneously achieve multiple requirements by using different routes. In the NRNT, the topology changes dynamically according to the environment and the situation, and the user's request changes dynamically, and therefore, the control must be able to follow the change with time.

Therefore, there may be introduced a radio resource control method that satisfies the user's satisfaction (e.g., the request) and also satisfies the requirements of the network side. For example, the user's request may be accumulated to satisfy the network capability. Also, for example, the network may be allocated to satisfy the user's request.

As the radio resource control method, round robin, maximum SIR, and proportional fairness may be used. A radio node whose position is fixed, a specific radio communication standard, and a given radio wave propagation environment may be used. The radio node is a base station, a relay station, a terminal, or the like. The specific radio communication standard is LTE, 5G, radio LAN, and the like. For example, stations are placed at high density in the urban area and at low density in the rural area with respect to the average of user requests. Handover or the like is utilized for user mobility.

On the other hand, it has been difficult to support topology changes, dynamic user requests, and the like.

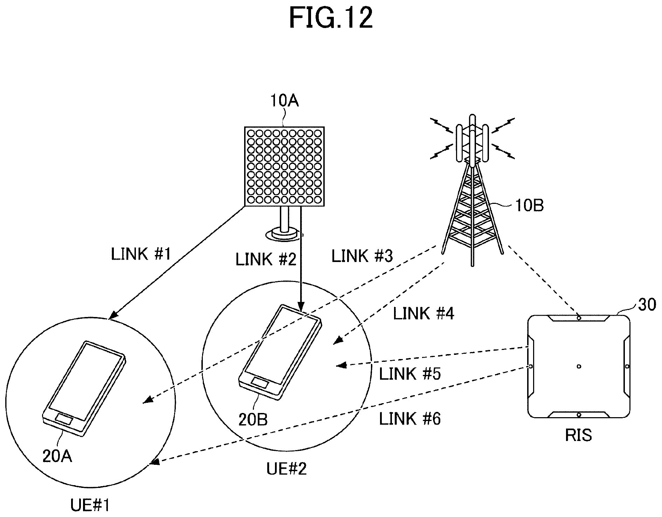

FIG. 12 is a diagram showing an example (1) of a communication environment according to an embodiment of the present invention. As shown in FIG. 12, assume a network in which a plurality of paths can be set for the UE. For example, the terminal 20A as UE#1 has paths of link #1 with the base station 10A, link #3 with the base station 10B, and link #6 with the RIS 30. For example, the terminal 20B as UE#2 has paths of link #2 with the base station 10A, link #4 with the base station 10B, and link #5 with the RIS 30. By combining these paths, the network capability may be flexibly set.

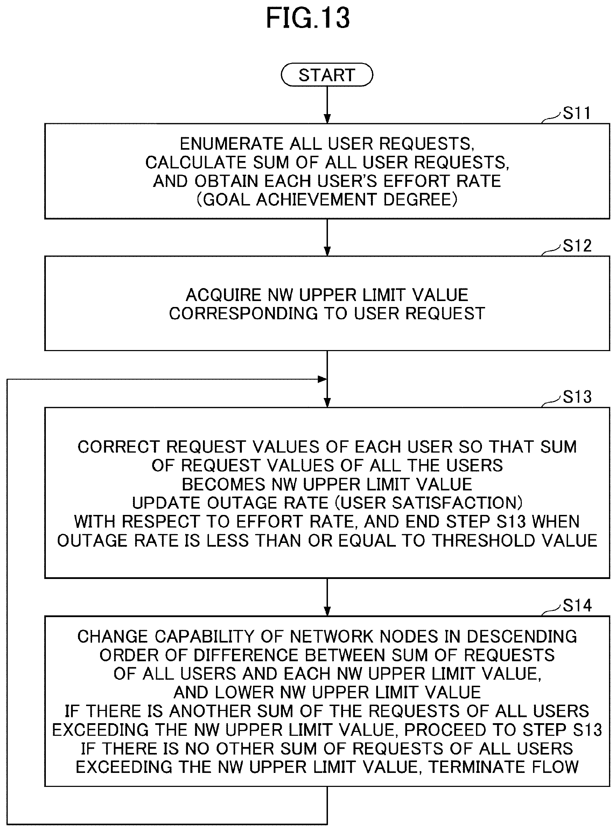

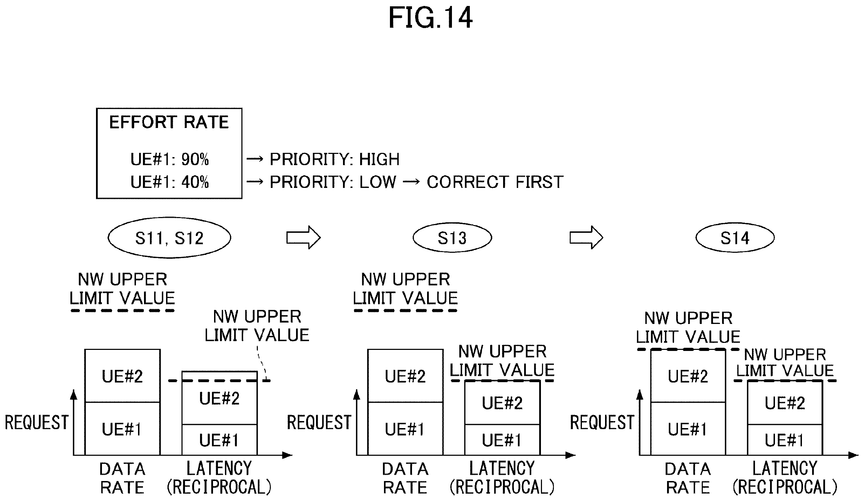

FIG. 13 is a flowchart for explaining an example (1) of network control according to the embodiment of the present invention. FIG. 14 is a diagram for explaining an example (1) of network control according to the embodiment of the present invention.

In step S11, the base station 10 enumerates the requests of all users and confirms the sum of the requests and the effort rate. The effort rate is a target achievement degree of a certain user and is used for prioritization. For example, as shown in FIG. 14, when the effort rate of UE#1 is 90% and the effort rate of UE#2 is 40%, the priority of UE#2 is lower than that of UE#1, and the user request of UE#2 may be corrected before that of UE#1, or the user request of UE#2 may be reduced before that of UE#1.

In step S12, the base station 10 acquires a network upper limit value corresponding to the user request. An example of FIG. 14 is an example of setting a data rate and a latency as the user request. The latency may be evaluated as a reciprocal user request. Note that the user request is not limited to the data rate and the latency, but may be, for example, quality, cost, power consumption, user-perceived performance, etc. Note that the network upper limit value may be a value determined by the capability of the network node, or may be changed by changing the capability of the network node.

Note that when changing the network capability, the capability of the network node to be changed may be frequency, bandwidth, path, route, link, transmission power, interference, etc. For example, the user request may be derived from the capability of the network node as shown in 1)-5) below.
1) A data rate is calculated by using the bandwidth, transmission power and/or interference.
2) A latency is calculated by using the path, route and/or link.
3) As for the feeling and/or quality, a stage is set for the latency, and a value corresponding to each stage is set.
4) Power consumption is calculated by using transmission power.
5) Cost is calculated by using frequency, bandwidth, path, route and/or transmission power.

In step S13, the base station 10 corrects the request values of each user so that the sum of all the users becomes the network upper limit value. FIG. 14 is an example of correcting the latency to the network upper limit value by reducing the user request related to the latency of UE#2. The base station 10 updates the outage rate (user satisfaction) with respect to the effort rate, and ends step S13 when the outage rate is less than or equal to the threshold value. The sum of the requests of all the users may be made equal to the network upper limit value by correcting the requests of 1 or a plurality of users so that the outage rate becomes less than or equal to the threshold value. When there is a difference between the sum of the requests of all the users and each network upper limit value, the process may proceed to step S14. The effort rate may be a target value of the probability that the request of the user is achieved, and the outage rate may be a probability that the request of the user is not achieved.

In step S14, the base station 10 changes the capability of the network nodes in descending order of the difference between the sum of the requests of all the users and each network upper limit value, and lowers the network upper limit value to match the sum of the requests of all the users. If there is another sum of the requests of all users exceeding the network upper limit value, the flow proceeds to step S13, and if there is no other sum of the requests of all users exceeding the network upper limit value, the flow may be terminated.

Subsequently, the base station 10 may execute communication with the terminal 20 of each user based on the network upper limit value and the request value of the user set in the above step.

By the above operation, the allowable limit value (lower bound) of the user and the minimum requirement value (lower bound) of the network can be matched to minimize the network upper limit value.

The network upper limit value may be reduced as shown in 1) and/or 2) below.
1) A priority order may be defined or set for the network node capability, and the network node capability may be lowered in order from the lowest network node capability. For example, the priority order of network node capabilities may be as follows. For example, the priority order assumes three levels: high, medium, and low.
   - Frequency: medium
   - Bandwidth: low
   - Path, route, or link: low
   - Transmission power: high
   - Interference: high
2) The difference between each user request and the upper limit value of each network capability may be sorted, and the network node capability may be reduced in descending order of the difference.

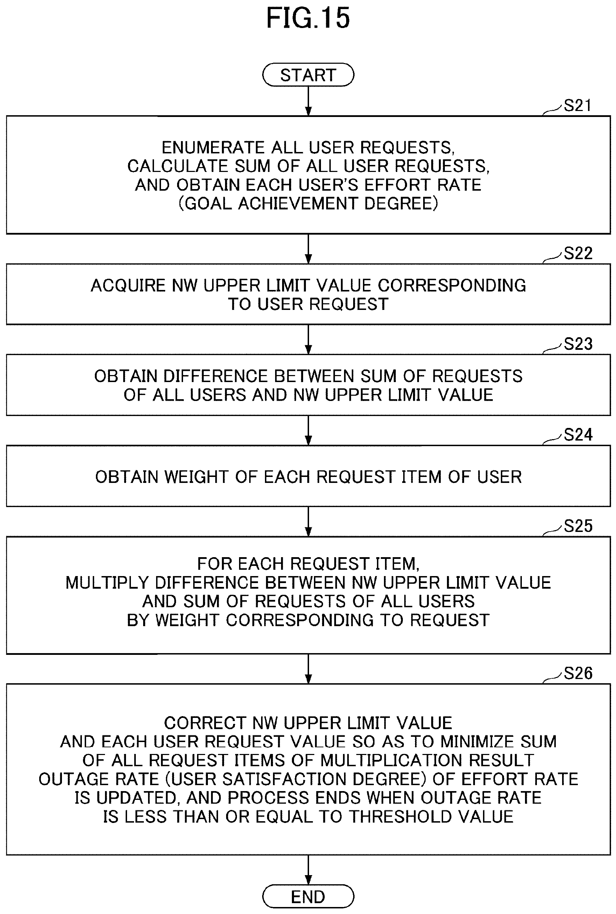

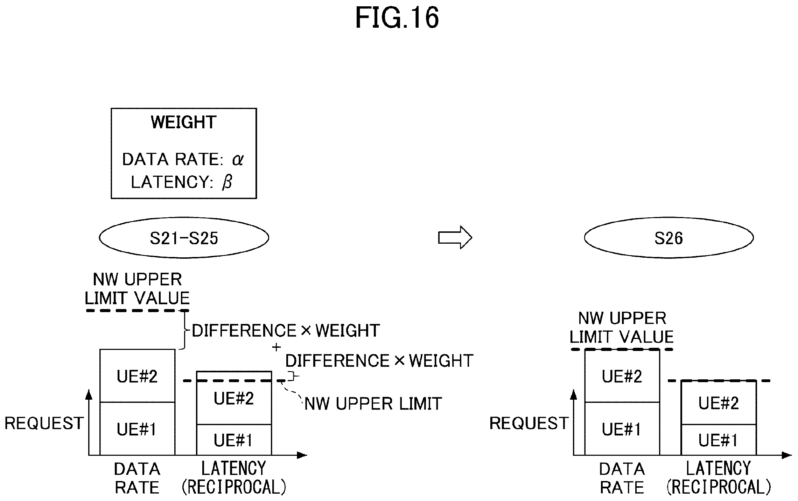

FIG. 15 is a flowchart for explaining an example (2) of network control according to an embodiment of the present invention. FIG. 16 is a diagram for explaining an example (2) of network control according to an embodiment of the present invention. FIGS. 15 and 16 show examples where there is a correlation between items of user requests. That is, in FIGS. 15 and 16, it may be assumed that user requests are not completely independent. Note that the flowchart of FIG. 15 may be executed under the control of the base station 10 or under the control of other network nodes.

In step S21, the base station 10 enumerates requests of all users and confirms the sum of the requests and the effort rate. The effort rate is a goal achievement degree of a certain user and is used for prioritization.

In step S22, the base station 10 acquires a network upper limit value corresponding to the user request. The example of FIG. 16 is an example of setting a data rate and a latency as the user request. The latency may be evaluated as a reciprocal user request. Note that the user request is not limited to the data rate and the latency, and may be, for example, quality, cost, power consumption, physical sensation, etc.

In step S23, the base station 10 obtains a difference between the sum of the requests of all users and the network upper limit value. In step S24, the base station 10 obtains a weight of each request item of the user. In step S25, for each request item, the base station 10 multiplies the difference between the network upper limit value and the sum of the requests of all users by a weight corresponding to the request. The weight of a request with no correlation may be 1, or the weight of a request with correlation may be set according to the degree of correlation. For example, in the example shown in FIG. 16, the data rate and the latency are correlated, and the weight of the data rate is α and the weight of the latency is β.

In step S26, the base station 10 sets the network upper limit value and the user request so as to minimize the sum of all request items of the multiplication result with respect to the difference. The outage rate (user satisfaction) of the effort rate is updated, and the process ends when the outage rate is less than or equal to the threshold value.

Subsequently, the base station 10 may execute communication with the terminal 20 of each user based on the network upper limit value and the request value of the user set in the above step.

Because there is a correlation, the user request and the network request may not completely coincide in the end.

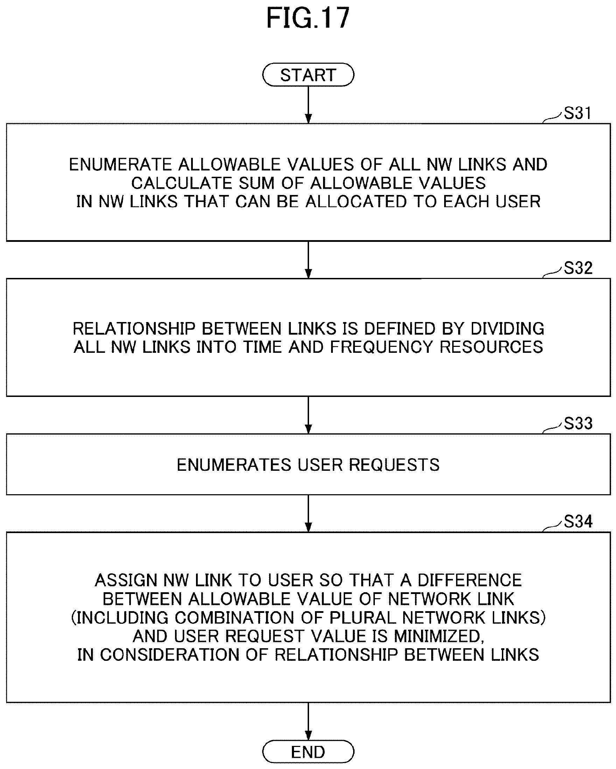

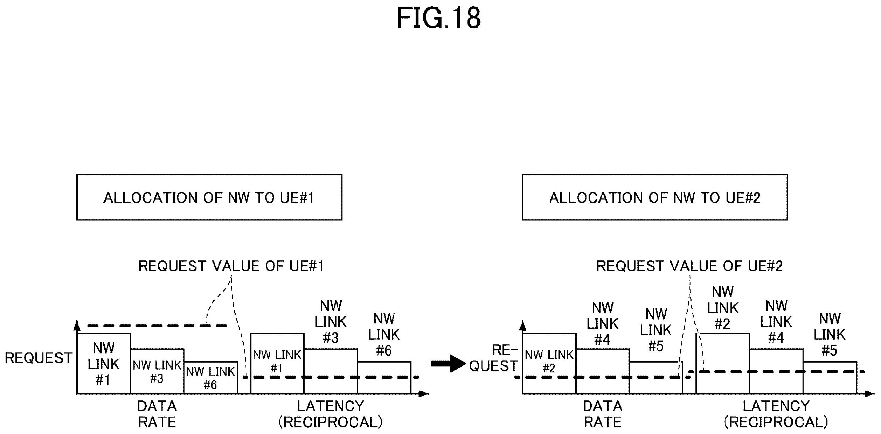

FIG. 17 is a flowchart for explaining an example (3) of controlling the network according to the embodiment of the present invention. FIG. 18 is a diagram for explaining an example (3) of controlling the network according to the embodiment of the present invention. FIGS. 17 and 18 show an example of allocating a network so as to satisfy a user request in a network environment where the links shown in FIG. 12 exist.

In step S31, the base station 10 enumerates allowable values of all network links and calculates a sum of allowable values in network links that can be allocated to each user. In step S32, a relationship between links in all network links is defined. For example, the relationship may be defined by dividing all network links into time and frequency resources. For example, the relationship may indicate how much guard interval is required and how much guard band is required. Table 1 shows an example of the relationship between links in all network links shown in FIG. 12.

**[Table 1]**

| **NW LINK** | **ORIGINAL NW CAPACITY** | **CONDITION AT WHICH NW CAPACITY IS DEGRADED** | **NW CAPACITY AFTER DEGRADING** |
|---|---|---|---|
| #1 | A | USE LINK #2 | aA |
| #2 | B | USE LINK #1 | bB |
| #3 | C | USE LINK #4 AND LINK #5 | cC |
| #4 | D | USE LINK #3 AND LINK #6 | dD |
| #5 | E | USE LINK #6 | eE |
| #6 | F | USE LINK #5 | fF |

The coefficients a, b, c, d, e, f shown in Table 1 may be greater than 0 and less than 1. As shown in Table 1, link #1 reduces its network capability from its original network capability A to aA that is less than A, by using link #2. Similarly, link #2 reduces its network capability from its original network capability from its original network capabilty C to cC that is less than C by using link #4 and link #5. Link #4 reduces its network capability from its original network capabilty D to dD that is less than D by using link #3 and link #6. Link #5 reduces its network capability from its original network capability E to eE that is less than E by using link #6. Link #6 reduces its network capability from its original network capability F to fF that is less than F by using link #5.

In step S33, the base station 10 enumerates user requests for each request item. In step S34, the base station 10 assigns a network link to a user so that a difference between an allowable value of a network link (including a combination of a plurality of network links) and a user request value is minimized in consideration of the relationship between the links defined in step S32.

Subsequently, the base station 10 may execute communication with the terminal 20 of each user based on the network link set by the above step.

For example, as shown in 1)-4) below, the order in which the network links are assigned to the users may be determined.
1) The sum of the user requests may be calculated, and the users may be selected sequentially in descending order. In the example shown in FIG. 18, when the user request is data rate and latency, the network assignment to UE#2 is determined after the network assignment to UE#1 is determined. That is, the network assignment to UE#2 may be determined based on the capability of the network link changed by the network link assigned to UE#1.
2) The user effort rate (target achievement degree) may be set, and the users may be selected sequentially in descending order.
3) An effort rate (target achievement degree) of the user is set, step S34 is executed for the randomly selected user, and the outage rate (user satisfaction degree) of the effort rate is updated. If the outage rate is less than or equal to the threshold value, the process may be terminated. If the outage rate is not less than or equal to the threshold value, one user may be selected at random from the unselected users, and the same process may be repeated. Thereafter, the same process may be repeated until all the users are selected. As described above, sequential and repeated operations considering interference may be executed.
4) The user's effort rate (target achievement degree) may be set, and step S34 may be executed by (number of users)! (factorial) to select the user assignment order in which the sum of the outage rates (user satisfaction degree) of the effort rates is the smallest or the largest. That is, the user assignment order may be determined by selecting the order of the users in permutation and total search.

The flowcharts of FIGS. 13, 15, and 17 may be executed under the control of the base station 10 or under the control of other network nodes as described above.

According to the embodiments described above, by controlling the user requests and the capabilities of the network nodes, it is possible to set up a network to support a dynamic network topology.

That is, in the radio communication system, it is possible to adjust the network capabilities and the user requests.

### (Hardware structure)

The block diagrams that have been used to describe the above embodiments (FIG. 2, FIG. 3, and FIG. 4) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, radio, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception unit, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, the functional block (component) to implement a function of transmission may be referred to as a transmission unit or a transmission unit. The method for implementing each component is not particularly limited as described above.

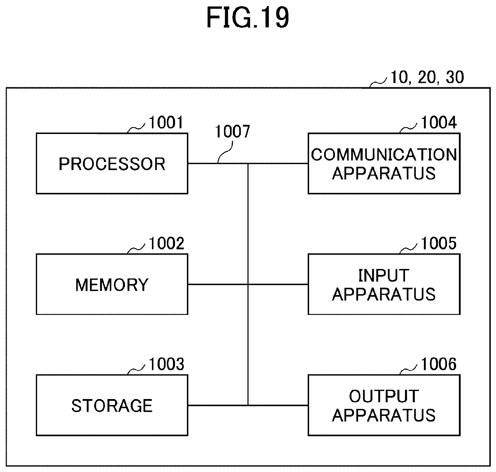

For example, the base station 10, the terminal 20, the radio relay apparatus 30, etc., according to an embodiment of the present disclosure may function as a computer for processing the radio communication method of the present disclosure. FIG. 19 is a diagram to show an example of a hardware structure of the base station 10, the terminal 20, and the radio relay apparatus 30 according to one embodiment. Physically, the above-described base station 10, the terminal 20, and the radio relay apparatus 30 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10, the terminal 20, and the radio relay apparatus 30 may be configured to include one or more of apparatuses illustrated in the drawings, or may be configured not to include part of apparatuses.

Each function of the base station 10, the terminal 20, and the radio relay apparatus 30 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Further, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in FIG. 2 may be implemented by control programs that are stored in the memory 1002 and that operate on the processor 1001. Further, for example, the control unit 240 of the terminal 20 illustrated in FIG. 3 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus) " and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or radio networks, and may be referred to as, for example, a "network device," a "network control unit," a "network card," a "communication module," and so on. The communication apparatus 1004 may be configured to include a high frequency switch, a duplexer, a filter, a frequency synthesizer, and so on in order to implement, for example, at least one of frequency division duplex (FDD) or time division duplex (TDD). For example, the transmitting/receiving antenna, the amplifier unit, the transmitting/reception unit, the transmission line interface, and the like, may be implemented by the communication apparatus 1004. The transmitting/reception unit may be physically or logically divided into a transmission unit and a reception unit.

The input apparatus 1005 is an input device that receives input from the outside (for example, a keyboard, a mouse, a microphone, a switch, a button, a sensor, and so on). The output apparatus 1006 is an output apparatus that outputs something to the outside (e.g., display, speaker, LED lamp). Note that the input apparatus 1005 and the output apparatus 1006 may be provided in an integrated structure (for example, a touch panel).

Further, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10, the terminal 20, and the radio relay apparatus 30 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

Further, the radio relay apparatus 30 may include a variable phase shifter, a phase shifter, an amplifier, an antenna, an array antenna, or the like as hardware constituting the variable unit 340 and the antenna unit 350 as required.

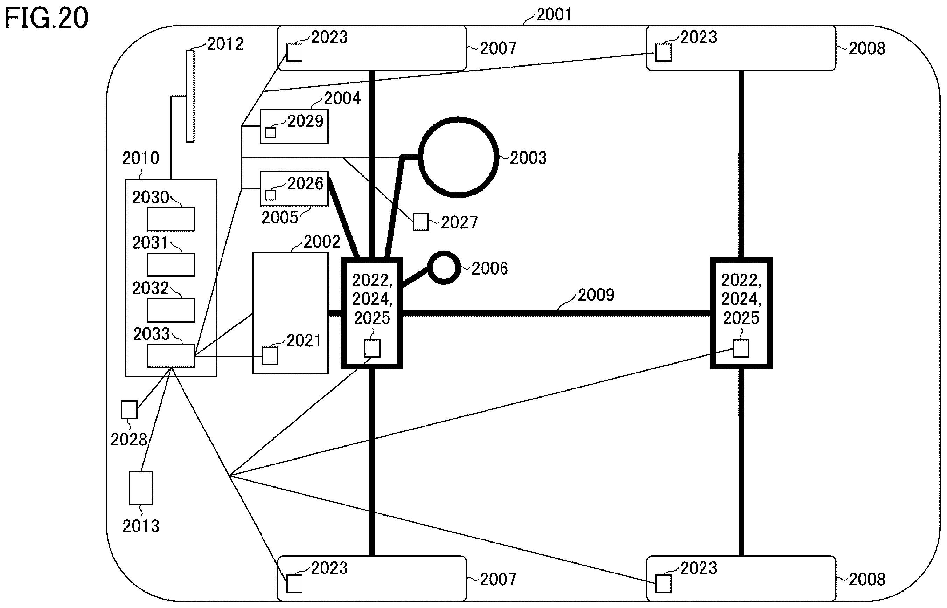

FIG. 20 illustrates an example of a configuration of a vehicle 2001. As illustrated in FIG. 20, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 that senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. Further, the driving support system unit 2030 transmits and receives various types of information via the communication module 2013 to implement a driving support function or an autonomous driving function.

The communication module 2013 can communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal from the current sensor input to the electronic control unit 2010 to the external device via radio communication. The communication module 2013 also transmits, to an external device via radio communication, the rotational speed signals of the front and rear wheels acquired by the rotational speed sensor 2022, the pneumatic pressure signals of the front and rear wheels acquired by the pneumatic pressure sensor 2023, the vehicle speed signal acquired by the vehicle speed sensor 2024, the acceleration signal acquired by the acceleration sensor 2025, the accelerator pedal depression amount signal acquired by the accelerator pedal sensor 2029, the brake pedal depression amount signal acquired by the brake pedal sensor 2026, the shift lever operation signal acquired by the shift lever sensor 2027, the detection signals for detecting obstacles, vehicles, pedestrians, etc. acquired by the object detection sensor 2028, and the like, which are input to the electronic control unit 2010.

The communication module 2013 receives various types of information (traffic information, signal information, inter-vehicle information, etc.) transmitted from the external devices and displays the received information on the information service unit 2012 provided in the vehicle 2001. Further, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021to 2029, etc., mounted in the vehicle 2001.

### (Summary of Embodiments)

As described above, according to an embodiment of the present invention, there is provided a base station including a control unit configured to change at least one of an upper limit value of a network or a request value of each user, based on the upper limit value of the network, which is determined based on a capability of a network node, and the request value of each user; and a communication unit configured to execute communication with each user based on the upper limit value of the network and the request value of each user.

According to the configuration, the network can be set to correspond to a dynamic network topology by controlling the user request and the capability of the network node. That is, the network capability and the user request can be adjusted in the radio communication system.

The control unit may change at least part of the request value of each user so that a sum of the request values of the users matches the upper limit value of the network. According to the configuration, the network can be set to correspond to a dynamic network topology by controlling the user request and the capability of the network node.

When the upper limit value of the network is greater than a sum of the request values of the users, the control unit may change at least part of the upper limit value of the network so that the upper limit value of the network matches the sum of the request values of the users. According to the configuration, the network can be set to correspond to a dynamic network topology by controlling the user request and the capability of the network node.

When there is a correlation between the request values of the users of different items, the control unit may change the upper limit value of the network and the request value, so as to minimize a sum of the request values that is a result obtained upon multiplying each difference between the upper limit value of the network and the request value of each user, by different weights. According to the configuration, the network can be set to correspond to the dynamic network topology by controlling the user request and the capability of the network node.

The control unit may define a relationship between links of the network, and determines a link to be assigned to a user based on an allowable value of a link determined by the relationship and the request value of the user. According to the configuration, the network can be set to correspond to the dynamic network topology by controlling the user request and the capability of the network node.

Further, according to the embodiment of the present invention, there is provided a communication method executed by a base station, the communication method including changing at least one of an upper limit value of a network or a request value of each user, based on the upper limit value of the network, which is determined based on a capability of a network node, and the request value of each user; and executing communication with each user based on the upper limit value of the network and the request value of each user.

According to the configuration, the network can be set to correspond to the dynamic network topology by controlling the user request and the capability of the network node. That is, in the radio communication system, the network capability and the user request can be adjusted.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, notification of information is by no means limited to the aspects/embodiments described in the present disclosure, and other methods may be used as well. For example, the information indication may be performed by physical layer signaling (e.g., DCI (Downlink Control Information), UCI (Uplink Control Information) ), upper layer signaling (e.g., RRC (Radio Resource Control) signaling, MAC (Medium Access Control) signaling, broadcast information (MIB (Master Information Block), SIB (System Information Block) ) ), other signals, or combinations thereof. Also, RRC signaling may be referred to as an "RRC message," and can be, for example, an RRC connection setup message, an RRC connection reconfiguration message, and so on.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), 6th generation mobile communication system(6G), xth generation mobile communication system (xG) (xG (x is, for example, an integer, a decimal)), FRA (Future Radio Access), NR (new Radio), New radio access(NX), Future generation radio access(FX) W-CDMA (registered trademark), GSM (registered trademark), CDMA2000, UMB (Ultra Mobile Broadband), IEEE 802.11 (Wi-Fi (registered trademark), IEEE 802.16 (WiMAX (registered trademark) ), IEEE 802.20, UWB (Ultra-WideBand), Bluetooth (registered trademark), and other appropriate systems, and a next generation system enhanced, corrected, created, defined therefrom. A plurality of systems may be combined (for example, a combination of LTE or LTE-A and 5G, and the like) for application.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or radio technologies (infrared, microwave, etc.), at least one of these wired line technologies or radio technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical formulas using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "Base Station (BS) ", "Radio Base Station", "Base Station Device", "Fixed Station", "NodeB", "eNodeB (eNB) ", "gNodeB (gNB) ", "Access Point", "Transmission Point", "Reception unit Point", "Transmission/Reception unit Point", "Cell", "Sector", "Cell Group", "Carrier", "Component Carrier", and the like, may be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "radio unit," "remote unit," "mobile device," "radio device," "radio communication device," "remote device," "mobile subscriber station," "access terminal," "mobile terminal," "radio terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Further, the base station in the present disclosure may be interpreted as a user terminal. For example, each aspect/embodiment of the present disclosure may be applied to the structure that replaces a communication between a base station and a user terminal with a communication between a plurality of terminals 20 (for example, which may be referred to as "Device-to-Device (D2D)," "Vehicle-to-Everything (V2X)," and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompass a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency domain, the microwave domain, and the light (both visible and invisible) domain.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. That is, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Further, a subframe may be constituted of one or a plurality of slots in the time domain. A subframe may be a fixed time length (for example, 1 ms) independent of numerology.

Numerology may be a communication parameter applied to at least one of transmission or reception unit of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, or the like.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Further, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI," a plurality of consecutive subframes may be referred to as a "TTI," or one slot or one mini-slot may be referred to as a "TTI." That is, at least one of a subframe or a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for terminals 20, scheduling of allocating radio resources (such as a frequency bandwidth and transmit power available for each terminal 20) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Further, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Further, a resource block may be constituted of one or a plurality of resource elements (Res). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). For the terminal 20, one or more BWPs may be configured in one carrier.

At least one of the configured BWPs may be activated, and the terminal 20 may assume that the UE will not transmit and receive signals/channels outside the activated BWP. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

- 10: base station
- 110: transmission unit
- 120: reception unit
- 130: setting unit
- 140: control unit
- 20: terminal
- 210: transmission unit
- 220: reception unit
- 230: setting unit
- 240: control unit
- 30: radio relay apparatus
- 310: transmission unit
- 320: reception unit
- 330: control unit
- 340: variable unit
- 350: antenna unit
- 1001: processor
- 1002: memory
- 1003: storage
- 1004: communication apparatus
- 1005: input apparatus
- 1006: output apparatus
- 2001: vehicle
- 2002: drive unit
- 2003: steering unit
- 2004: accelerator pedal
- 2005: brake pedal
- 2006: shift lever
- 2007: front wheel
- 2008: rear wheel
- 2009: axle
- 2010: electronic control unit
- 2012: information service unit
- 2013: communication module
- 2021: current sensor
- 2022: revolution sensor
- 2023: pneumatic sensor
- 2024: vehicle speed sensor
- 2025: acceleration sensor
- 2026: brake pedal sensor
- 2027: shift lever sensor
- 2028: object detection sensor
- 2029: accelerator pedal sensor
- 2030: drive support system unit
- 2031: microprocessor
- 2032: memory (ROM, RAM)
- 2033: communication port (IO port)

## Claims

1. A base station comprising:
a control unit configured to change at least one of an upper limit value of a network or a request value of each user, based on the upper limit value of the network, which is determined based on a capability of a network node, and the request value of each user; and
a communication unit configured to execute communication with each user based on the upper limit value of the network and the request value of each user.

2. The base station according to claim 1, wherein the control unit changes at least part of the request value of each user so that a sum of the request values of the users matches the upper limit value of the network.

3. The base station according to claim 1, wherein, when the upper limit value of the network is greater than a sum of the request values of the users, the control unit changes at least part of the upper limit value of the network so that the upper limit value of the network matches the sum of the request values of the users.

4. The base station according to claim 1, wherein, when there is a correlation between the request values of the users of different items, the control unit changes the upper limit value of the network and the request value, so as to minimize a sum of the request values that is a result obtained upon multiplying each difference between the upper limit value of the network and the request value of each user, by different weights.

5. The base station according to claim 1, wherein the control unit defines a relationship between links of the network, and determines a link to be assigned to a user based on an allowable value of a link determined by the relationship and the request value of the user.

6. A communication method executed by a base station, the communication method comprising:
changing at least one of an upper limit value of a network or a request value of each user, based on the upper limit value of the network, which is determined based on a capability of a network node, and the request value of each user; and
executing communication with each user based on the upper limit value of the network and the request value of each user.
